# EUROPÄISCHE PATENTSCHRIFT

(11) **EP 4 368 776 B1**
(45) Veröffentlichungstag und Bekanntmachung des Hinweises auf die Patenterteilung: **29.01.2025**
(21) Anmeldenummer: 23206099.6
(22) Anmeldetag: 26.10.2023
(51) Int. Cl.: E01B 31/00, E01B 31/13, E01B 31/17, B07B 7/083, B08B 5/04, B23Q 11/00, F04D 29/28, F24F 9/00

(54) **ABSAUGEINRICHTUNG FÜR PARTIKEL BEI DER SPANABHEBENDEN BEARBEITUNG VON GLEISSCHIENEN**
SUCTION DEVICE FOR PARTICLES IN THE MACHINING OF RAILS
DISPOSITIF D'ASPIRATION DE PARTICULES LORS DE L'USINAGE PAR ENLÈVEMENT DE COPEAUX DE RAILS DE VOIE FERRÉE

(30) Priorität: 09.11.2022 DE 102022129601
(43) Veröffentlichungstag der Anmeldung: 15.05.2024
(73) Patentinhaber: Schweerbau International GmbH & Co. KG, 31655 Stadthagen (DE)
(72) Erfinder: Mevert, Frank, 31714 Lauenhagen (DE)
(74) Vertreter: Scheffler, Jörg

(56) Entgegenhaltungen:
- EP-A1- 2 412 871
- EP-A1- 2 886 714
- EP-B1- 0 340 471
- WO-A1-2022/171410
- US-A- 805 965
- US-B2- 7 322 879

## Beschreibung

Die Erfindung betrifft eine insbesondere mobile, mit Radiallüftern ausgestattete Absaugeinrichtung für Partikel oder sonstige Fremdstoffe, insbesondere Späne, die infolge spanabhebender Bearbeitung durch Schleifen oder Fräsen mehrerer zur Nutzung durch Schienenfahrzeuge bestimmten parallelen Gleisschienen entstehen, wobei jeder Radiallüfter mit einer Ansaugöffnung zum Ansaugen der bei der Bearbeitung abgetragenen Partikel und einer Auslassöffnung zur Abgabe der Partikel in eine Sammeleinrichtung ausgestattet ist, und wobei der Radiallüfter ein um eine Rotationsachse drehbeweglich angetriebenes Lüfterrad mit einer Umfangsfläche und mit einer der Ansaugöffnung zugewandten Prallfläche zur radialen Ablenkung der auf die Prallfläche auftreffenden Partikel oder Fremdstoffe hat. Weiterhin betrifft die Erfindung eine mobile Bearbeitungseinheit zur spanabhebenden Bearbeitung, insbesondere einer Gleisschiene für Schienenfahrzeuge mit einer solchen Absaugeinrichtung sowie ein Schienenfahrzeug mit einer eine Absaugeinrichtung aufweisenden Bearbeitungseinheit zur spanabhebenden Bearbeitung.

Die Bearbeitung der Schienenkopfoberfläche zum Entfernen von Wellen und Rissen und zum Reprofilieren erfolgt heute häufig im Gleis durch materialabtragende Bearbeitung. Für ein Beseitigen gröberer Schäden werden dabei häufig mobile Schienenfräsen eingesetzt. Diese bestehen aus einem oder mehreren in Fräsaggregaten angeordneten, motorisch angetriebenen Fräsrädern, die an einem speziellen Schienenfahrzeug angeordnet sind, und von dieser entlang der Schienen bewegt werden. Die Zustellung erfolgt über Linearachsen in mindestens zwei Richtungen, wobei durch Taster und Gleitkufen die Relativposition zu der Schiene erfasst wird, um so mittels einer elektronischen Regelung eine genaue Steuerung der Zustellung und des Antriebs der Fräsräder und somit des gewünschten Fräsabtrags zu erreichen. Die abgetragenen Späne werden einem Behälter einer Sammeleinrichtung zugeführt und sind somit recycelbar.

Es sind auch bereits Abschirmelemente zum Auffangen der beim Fräsen entstehenden Abriebpartikel bekannt, die den Schienenverlauf in dem Abschnitt, in dem die Bearbeitung stattfindet, weitgehend umschließen, um so in einem definierten Raum die Abriebpartikel und Funken zurückzuhalten, die dann über eine Absaugung abgesaugt werden können.

Die EP 0 340 471 B1 beschreibt einen mit einem integrierten Schmutzabscheider ausgestatteten Radiallüfter für elektrische Triebfahrzeuge zur Kühlung der Fahrmotoren. Beim Betrieb des Radiallüfters gelangen mit der Ansaugluft Staub und Partikel in den Radiallüfter, die aufgrund ihrer größeren Masse durch Öffnungen in einen als Ringkanal ausgebildeten Abscheideraum mit einem sich in Drehrichtung des Ventilators erweiternden Querschnitt radial abgeschieden und mittels eines Rohrs ausgetragen werden.

Aus der EP 2 143 958 A1 ist ein Radiallüfter bekannt, der eine das Lüfterrad umgebende Sammelrinne aufweist, um so allein durch die Drehbewegung des Lüfterrads einen Großteil der im zu fördernden Fluid enthaltenen Partikel unter Einwirkung der Massenkräfte und dynamischen Kräfte über den umlaufenden Spalt der Sammelrinne zuzuführen.

Die US 805 965 A bezieht sich auf ein Baggergerät mit einem Saugrohr und mit Schneidwerkzeugen, die am Einlassende des Saugrohrs wirken und die an Wellen angeordnet sind, wobei sich die Schneiden des Schneidwerkzeugs in Längsrichtung des Saugrohrs erstrecken.

Aus der CN 1 07 642 490 A ist eine Abwasserpumpe bekannt, die teilweise eine große Menge an Fremdkörpern fördert. Zwei an Wellen angeordnete Zerkleinerungsmesser dienen der Grobzerkleinerung und Feinzerkleinerung der Fremdkörper.

Die DE 21 26 678 A betrifft eine Vorrichtung zur kontinuierlichen Herstellung von Dispersionen mit hohem Dispersitätsgrad. Hierzu hat die Vorrichtung ein Laufrad und eine Scheibe mit ineinandergreifenden Zahnkränzen, wobei die ringförmigen Querschnittsflächen zwischen den Zähnen vom strömenden Stoff ausgefüllt werden.

Aus der DE 16 53 802 A ist eine Pumpe zum Fördern von mit faserigen Stoffen durchsetzten, unreinen Dickflüssigkeiten, mit einem Paar von Förderschnecken bekannt, welche gegensinnige Steigungsrichtung haben und in deren Schnittbereich eine Radialschaufel derart eingesetzt ist, dass die Dickflüssigkeit tangential in diesen Radial-Schaufelbereich übergeht. Das Pumpengehäuse kann in dem Bereich, welcher dem Umfang der Wendelfläche gegenüberliegt, eine gerippte oder gezahnte Oberfläche aufweisen.

Die EP 2 412 871 A1 betrifft eine Vorrichtung zum materialabtragenden Bearbeiten von Schienen mit einer Absaugung für den entstehenden Materialabtrag, wie beispielsweise Frässpäne, Hobelspäne oder Schleifstaub. Der auf dem Trägerfahrzeug angeordnete Materialabtragsammelbehälter kann entsprechend groß gewählt werden, um Arbeitsunterbrechungen zu reduzieren.

Die US 7 322 879 B2 beschreibt eine Vorrichtung zum kontinuierlichen Reprofilieren von Schienen mit einem Aufnehmer für den Schleifabfall, wobei die Sammelöffnung in unmittelbarer Nähe einer Schleifscheibe angeordnet ist und der Aufnehmer mit Abfalltransportmitteln zusammenwirkt. Dadurch werden Teilchen geringer Masse und Schwerteilchen zurückgewonnen und zur Entsorgung in einen Container befördert.

Die EP 2 886 714 A1 zeigt eine Vorrichtung zur Schleifbearbeitung von Schienen mit einem Abschirmelement zum Auffangen entstehender Abriebpartikel, welches einen Anschluss für eine Absaugung hat, sodass die durch die Abschirmelemente zurückgehaltenen Partikel abgesaugt und in einer Auffangvorrichtung gesammelt werden können.

Bei einer Instandhaltungsmaschine zur kontinuierlichen Reprofilierung der Schienen mit mehreren Fräswerkzeugen gemäß der WO 2022 / 171 410 A1 ist ein vor dem Fräswerkzeug angeordneter, zur Abstützung des Gehäuses dienender Gleitschuh zur Aufnahme der Materialspäne hohl ausgebildet. Über eine an den Gleitschuh angeschlossene Saugvorrichtung werden die Materialspäne in einen Auffangbehälter befördert.

Als nachteilig bei den bekannten mobilen Absaugeinrichtungen wirkt sich in der Praxis das vergleichsweise große Volumen der Sammeleinrichtung aus, welches erforderlich ist, um die Partikel aufzufangen und einer Entsorgung oder Wiederverwendung zuzuführen. In der Praxis ist die mögliche Bearbeitungsdauer bei der Fräs- oder Schleifbearbeitung oftmals durch das Volumen der Sammeleinrichtung limitiert.

Der Erfindung liegt daher die Aufgabe zugrunde, eine einfache Möglichkeit zur Nachbehandlung der Partikel oder Fremdstoffe zu schaffen, um so die Bearbeitungsdauer zu verlängern. Weiterhin liegt der Erfindung die Aufgabe zugrunde, eine mobile Bearbeitungseinheit sowie ein damit ausgestattetes Schienenfahrzeug mit verlängerter Bearbeitungsdauer zu schaffen.

Die erstgenannte Aufgabe wird erfindungsgemäß mit einer Absaugeinrichtung gemäß den Merkmalen des Anspruchs 1 gelöst. Die weitere Ausgestaltung der Erfindung ist den Unteransprüchen zu entnehmen.

Die Absaugeinrichtung hat zumindest zwei parallel zueinander beabstandete und verschiedenen Gleisschienen zugeordnete Radiallüfter, die jeweils einen mit der Umfangsfläche des Lüfterrads umfangsabschnittsweise in einem Umfangswinkel zwischen 200° und 300°, insbesondere ca. 270°, einen Ringspalt begrenzenden Sammelkanal aufweisen, wobei die Lüfterräder benachbarter Radiallüfter der Absaugeinrichtung mit ihrer jeweiligen Umfangsfläche gemeinsam einen tangentialen Walzenspalt mit einer Spaltbreite größer null oder aufeinander abwälzend bzw. kämmend begrenzen, und dass der jeweilige Sammelkanal der verschiedenen benachbarten Lüfterräder in diesen Walzenspalt mündet, sodass zumindest ein wesentlicher Anteil von mehr als 50 % der zugeführten Partikel durch den Walzenspalt strömt, wobei der Bereich in Strömungsrichtung hinter der Engstelle des Walzenspalts die Auslassöffnung für den Abluftstrom und die darin mitgeführten Partikel und Fremdstoffe bildet. Indem erfindungsgemäß die Partikel oder Fremdstoffe nicht einfach unbehandelt der Sammeleinrichtung zugeführt werden, sondern zuvor durch den Walzenspalt zwischen den benachbarten Lüfterrädern hindurchgeführt werden, werden diese in dem entsprechend angepassten und vorzugsweise einstellbaren Walzenspalt verformt oder zerkleinert, insbesondere geglättet oder gebrochen, mit der Folge, dass das Volumen reduziert und somit die Dichte der Partikel und Fremdstoffe in der Sammeleinrichtung wesentlich erhöht wird. In überraschend einfacher Weise kann somit die Absaugeinrichtung neben ihrer Hauptfunktion dem Abtransport der abgetragenen Partikel und Fremdstoffe auch die Funktion einer Nachbehandlung zur Reduzierung des Volumens erfüllen, ohne dass hierzu ein zusätzliches Aggregat oder ein zusätzlicher Energieaufwand erforderlich wird. Indem auf diese Weise das verfügbare Behältervolumen der Sammeleinrichtung durch die Aufnahme einer größeren Partikelmasse besser genutzt wird, wird die Betriebsdauer wesentlich verlängert, die in der Praxis wesentlich durch den Füllgrad der Sammeleinrichtung und die erforderliche Leerung begrenzt ist.

Die Lüfterräder können auch relativ zueinander beweglich und mit einer definierten Vorspannung gegeneinander vorgespannt ausgeführt sein, sodass hindurchtretenden Späne mit einer Vorspannkraft beaufschlagt und dadurch verformt werden.

Bei einer besonders vorteilhaften Ausführungsform der Erfindung, nimmt die Querschnittsfläche des Sammelkanals in Strömungsrichtung bzw. Rotationsrichtung ab. Hierdurch entsteht innerhalb des Sammelkanals ein Düseneffekt, welcher zu einer Beschleunigung der Luftströmung führt, sodass die mitgeführten Partikel mit erhöhter Geschwindigkeit in den Walzenspalt eintreten und dadurch effektiver zerkleinert werden. Ergänzend kann auch eine zusätzliche Prallfläche im Bereich der Auslassöffnung des Walzenspalts, insbesondere diesem gegenüberliegend, vorgesehen sein, um so die kinetische Energie der Partikel für eine weitere Komprimierung der Partikel zu nutzen.

Die Umfangsflächen der benachbarten Lüfterräder könnten eine komplementäre Kontur aufweisen und vorzugsweise einen Walzenspalt konstanter Breite bilden, welcher beispielsweise einem gebogenen Verlauf folgt, indem eine Umfangsfläche konvex und die andere Umfangsfläche konkav ausgeführt ist. Besonders praxisgerecht ist es hingegen, wenn die Umfangsfläche des jeweiligen Lüfterrads durch die Mantelfläche eines rotationssymmetrischen, insbesondere zylindrischen Lüfterrads gebildet ist, sodass die gesamte Länge des Walzenspalts parallel zu der Rotationsachse der Lüfterräder gleichermäßig mit den zugeführten Partikeln oder Fremdstoffen beaufschlagt wird.

Eine weitere, ebenfalls besonders Erfolg versprechende Weiterbildung der Erfindung wird auch dadurch erreicht, dass der Sammelkanal zumindest in einem dem Walzenspalt benachbarten Bereich die Umfangsfläche sowie die Prallfläche und/oder eine Rückseite mit einem geringen Spalt zwischen 0,5 mm und 10 mm begrenzend einschließt. Dadurch wird verhindert, dass die im Luftstrom mitgeführten festen Bestandteile den Walzenspalt umgehen, insbesondere also entlang der Prallfläche oder der Rückseite strömen und dadurch unbehandelt in die Sammeleinrichtung gelangen. Um mögliche Verstopfungen zu vermeiden, kann ein Bypass-Anteil von bis zu 25 % der mitgeführten Partikel durch entsprechend Toleranzmaße des Sammelkanals vorgesehen sein.

Erfindungsgemäß ist es nicht ausgeschlossen, dass der jeweilige Sammelkanal in einem beispielsweise spitzen Winkel gegenüber der Rotationsachse auf den Walzenspalt trifft. Besonders praxisgerecht ist hingegen eine Ausgestaltungsform der Erfindung, bei welcher der Sammelkanal tangential in den Walzenspalt zwischen den Lüfterrädern mündet und dabei insbesondere parallel zu der Haupterstreckungsebene der Lüfterräder verläuft. Dabei weist der Sammelkanal vorzugsweise parallel zu der Rotationsachse keine oder eine lediglich geringfügig größere Breite auf als die Breite der Umfangsfläche zwischen der Prallfläche und der Rückseite der Lüfterräder.

Die Umfangsflächen der den Walzenspalt begrenzenden Lüfterräder können zylindrisch ausgeführt sein, wobei die Durchmesser unterschiedlich sein können. Besonders zweckmäßig ist es hingegen, wenn die einen gemeinsamen Walzenspalt begrenzenden Lüfterräder, insbesondere zumindest die jeweiligen Umfangsflächen, übereinstimmende Abmessungen aufweisen.

Weiterhin hat es sich als besonders zweckmäßig erwiesen, wenn die Größe des Walzenspalts beispielsweise durch eine Änderung des Abstands der parallelen Rotationsachsen der beiden Lüfter einstellbar ist, sodass der Walzenspalt an die Größe und sonstige Beschaffenheit der Partikel oder Fremdstoffe angepasst und unerwünschte Verstopfungen in dem Walzenspalt vermieden werden können. Im Betrieb der Absaugeinrichtung kann auch zyklisch oder aufgrund erfasster Messwerte eine Änderung der Größe des Walzenspalts vorgesehen sein, um beispielsweise durch eine kurzzeitige Vergrößerung des Walzenspalts im Eingangsbereich anhaftende Partikel durch erhöhte Strömungsgeschwindigkeiten abzulösen.

Die insbesondere zylindrischen Umfangsflächen könnten eine glatte oder raue Oberflächenbeschaffenheit aufweisen. Außerdem können die Umfangsflächen eine wendelgewellte Beschaffenheit oder helixförmige Vertiefungen oder Vorsprünge mit einer Steigung gegenüber der Rotationsachse aufweisen. Gemäß einer weiteren, ebenfalls besonders Erfolg versprechenden Variante der Erfindung weisen die Umfangsflächen eine Strukturierung und/oder Konturierung, mit insbesondere nuten- oder rillenförmigen parallelen Vertiefungen auf, die ineinander eingreifen können, sodass die Erhebungen oder Vorsprünge an der ersten Umfangsfläche in die entsprechenden Vertiefungen der zweiten Umfangsfläche eingreifen. Hierdurch entstehen größere Kontaktflächen für die mitgeführten Partikel, wodurch ein höherer Umformungsgrad erreicht wird, welcher zu einem wirksamen Brechen der in den Walzenspalt eintretenden Späne führt.

Beispielsweise weisen die Umfangsflächen rotationssymmetrische radiale Vorsprünge auf, die in axialer Richtung mehrere parallele nutenförmige oder rillenförmige Vertiefungen begrenzen und in benachbarte Vertiefungen bzw. Vorsprünge eingreifen.

Eine andere, ebenfalls besonders Erfolg versprechende Abwandlung der Erfindung wird auch dadurch erreicht, dass die Umfangsfläche in Umfangsrichtung eine zyklisch zunehmende und abnehmende Kontur aufweist, die in eine entsprechende Kontur der benachbarten Umfangsfläche kämmend eingreift. Hierdurch entstehen ähnlich einem Zahnrad miteinander kämmende Kontaktflächen zwischen den verschiedenen Umfangsflächen, durch die zusätzliche Scherkräfte auf die eingeschlossenen Partikel ausgeübt werden, um so eine wirksame Zerkleinerung zu erreichen.

Um eine optimale radiale Ablenkung der axial eintretenden Strömung sowie der mitgeführten Partikel und Fremdstoffe zu erreichen, ist die Prallfläche zur radialen Strömungsablenkung mit insbesondere aufgeschweißten, sich insbesondere orthogonal zu der Oberfläche der Prallfläche erstreckenden Stegen ausgestattet.

Die erfindungsgemäße Aufgabe wird weiterhin noch gelöst mit einer mobilen Bearbeitungseinheit zur spanabhebenden Bearbeitung, einer Gleisschiene für Schienenfahrzeuge mit einer Absaugeinrichtung, wobei die mobile Bearbeitungseinheit dauerhaft oder vorübergehend mit einem Fahrzeug als Träger verbunden sein kann.

Außerdem kann eine autonome Bearbeitungseinheit mit einer Sammeleinrichtung realisiert werden, indem ein Schienenfahrzeug mit einer eine Absaugeinrichtung aufweisenden Bearbeitungseinheit zur spanabhebenden Bearbeitung ausgestattet ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine geschnittene Seitenansicht der erfindungsgemäßen, mit zwei Radiallüftern ausgestatteten Absaugeinrichtung;
- Fig. 2: eine Draufsicht auf die in der Figur 1 gezeigte Absaugeinrichtung;
- Fig. 3: eine vergrößerte Detaildarstellung der Einzelheit III in der Figur 1;
- Fig. 4: eine vergrößerte Detaildarstellung der Einzelheit IV in der Figur 2;
- Fig. 5: eine entlang der Linie V-V geschnittene Darstellung des in Figur 2 gezeigten Radiallüfters;
- Fig. 6: eine perspektivische Darstellung der Absaugeinrichtung.

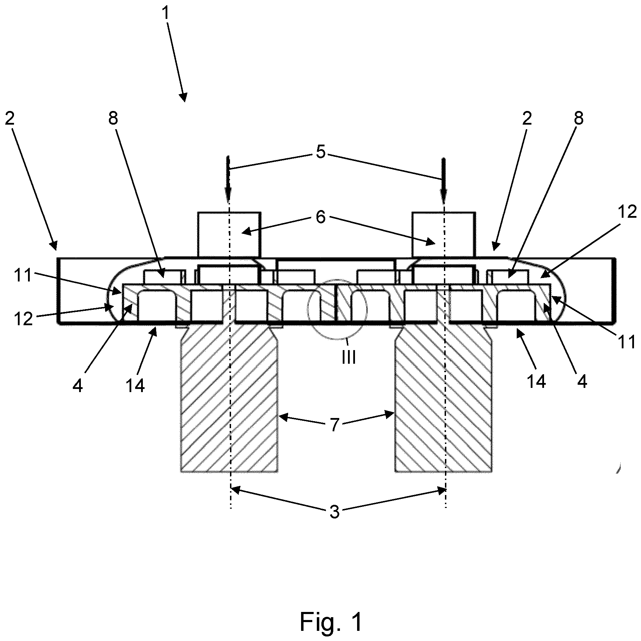

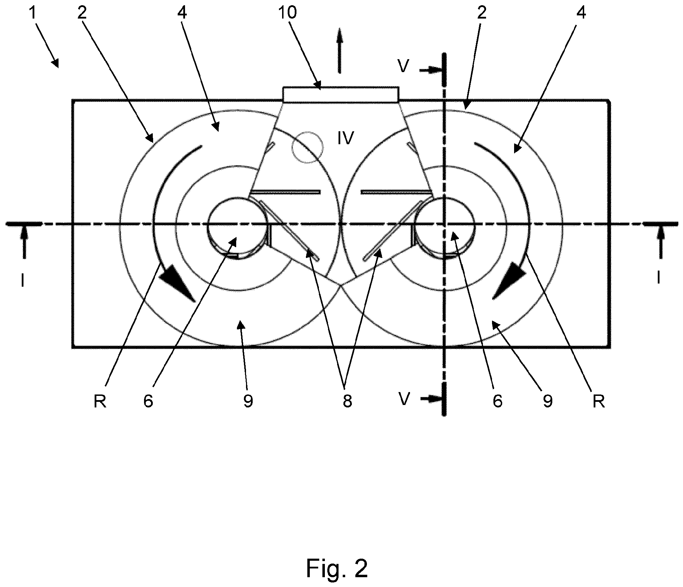

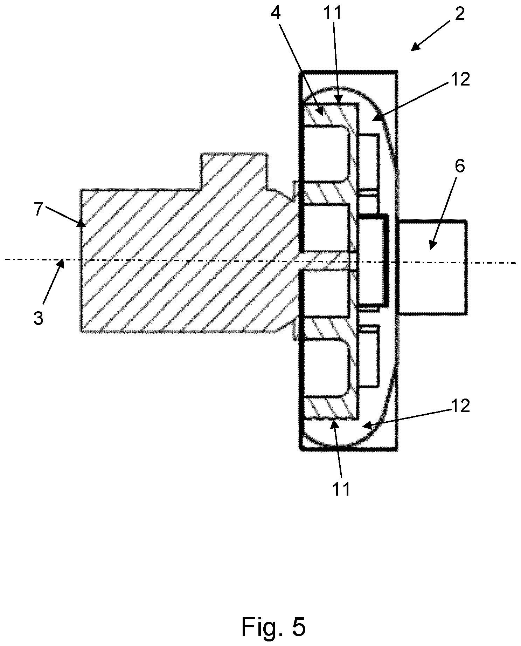

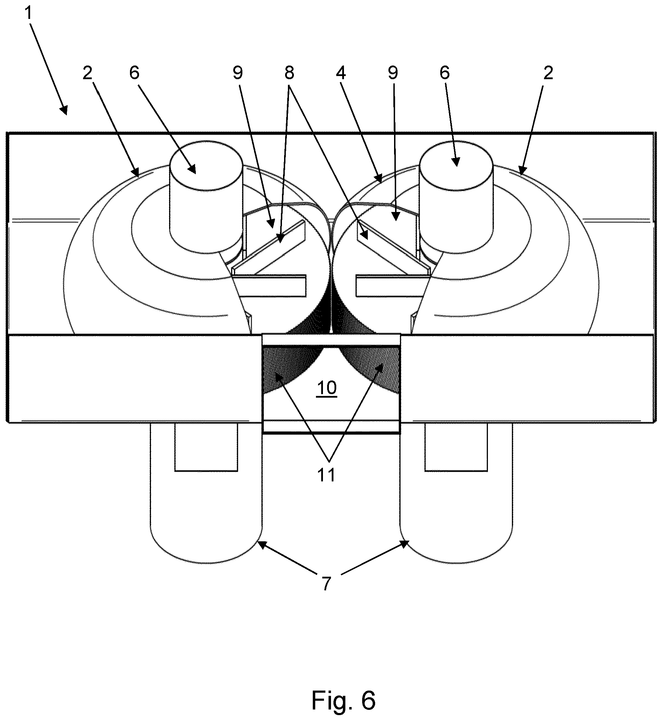

Die erfindungsgemäße Absaugeinrichtung 1 wird nachstehend anhand der Figuren 1 bis 6 näher erläutert. Die Absaugeinrichtung 1 hat zwei Radiallüfter 2 zum Absaugen von Partikeln, insbesondere Späne, wie sie infolge spanabhebender Bearbeitung typischerweise entstehen. Jeder Radiallüfter 2 der dargestellten Bauform ist jeweils einer von zwei parallelen Gleisschienen des Schienenverkehrs zugeordnet, um so während der Schienenbearbeitung den unerwünschten Eintrag von Fremdstoffen in das Gleisbett zu vermeiden. Dabei ist die Erfindung grundsätzlich nicht auf die Schienenbearbeitung beschränkt.

Die von der Schiene abgetragenen Partikel und sonstigen Fremdstoffe aus dem Gleisbett werden zusammen mit dem bezüglich der jeweiligen Rotationsachse 3 eines jeweiligen Lüfterrads 4 axial angesaugten Luftstrom 5 einer Ansaugöffnung 6 zugeführt. Infolge der in Pfeilrichtung R mittels eines jeweiligen Antriebs 7 in Rotation versetzten Lüfterräder 4 wird der Luftstrom 5 und die darin mitgeführten Feststoffe an einer mit aufgeschweißten Leisten 8 bestückten Prallfläche 9 radial abgelenkt und einer Auslassöffnung 10 zur Abgabe der Partikel in eine nicht gezeigte Sammeleinrichtung zugeführt. Jedes Lüfterrad 4 ist in seiner Grundform zylindrisch und hat eine im dargestellten Beispiel zu der Rotationsachse 3 konzentrische Umfangsfläche 11, die umfangsabschnittsweise von einem Sammelkanal 12 eingeschlossen ist. Die Partikel sammeln sich aufgrund ihrer Eigenmasse in einem Ringspalt, der zwischen dem Sammelkanal 12 und einer Umfangsfläche 11 des Lüfterrads 4 begrenzt ist, und werden in Umfangsrichtung von dem Luftstrom 5 mitgerissen. Dabei verändert sich die Querschnittsform und -fläche des Sammelkanals 12 in Strömungsrichtung derart, dass einerseits eine Beschleunigung der Strömung eintritt, andererseits der Sammelkanal 12 so geformt ist, dass dieser die Prallfläche 9 und eine zu dieser parallele Rückseite 14 mit einem abnehmenden axialen Abstand seitlich umschließt. Dementsprechend wird der Luftstrom zwischen den durch die Ebene der Prallfläche 9 und durch die Ebene der Rückseite 14 begrenzten Bereich konzentriert. Im weiteren Strömungsverlauf tritt der Luftstrom in den von den beiden Umfangsflächen 11 begrenzten Walzenspalt S tangential ein, welcher so bemessen ist, dass es zu einer mechanischen Krafteinwirkung auf die Partikel kommt. Lange Späne werden so geglättet und gebrochen, sodass das Schüttvolumen in der Sammeleinrichtung deutlich reduziert ist. Der Walzenspalt S ist hierzu durch eine Parallelverschiebung der Lüfterräder 4 in Richtung des Doppelpfeils 13 einstellbar und kann so an die jeweiligen Einsatzbedingungen optimal angepasst werden.

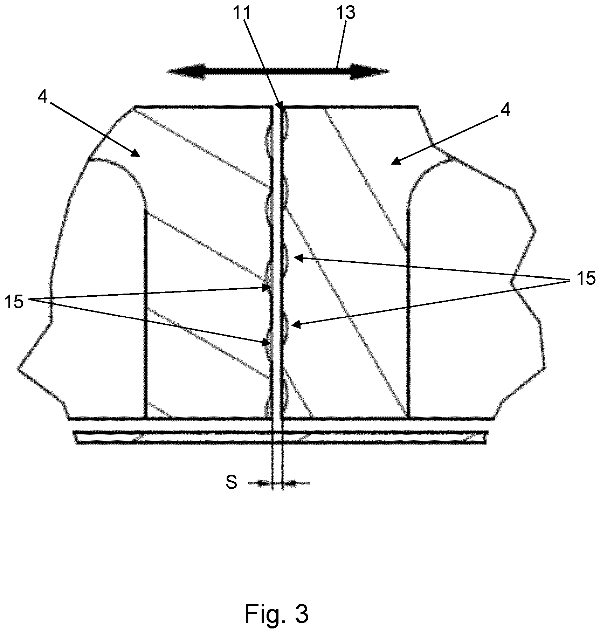

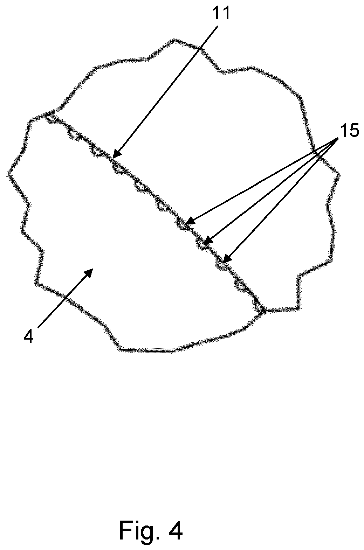

Wie insbesondere in den Figuren 3 und 4 zu erkennen ist, sind die Umfangsflächen 11 mit regelmäßigen Strukturierungen 15 versehen, die sich sowohl in Umfangsrichtung als auch in Querrichtung parallel zur Rotationsachse 3 erstrecken. Hierdurch wird die Kontaktfläche zwischen der Umfangsfläche 11 und den Partikeln vergrößert, wobei es zu einer verbesserten Umformung durch erhöhte Scherkräfte kommt und zugleich die Gefahr der Anhaftung von Partikeln vermindert wird.

### BEZUGSZEICHENLISTE

- 1: Absaugeinrichtung
- 2: Radiallüfter
- 3: Rotationsachse
- 4: Lüfterrad
- 5: Luftstrom

- 6: Ansaugöffnung
- 7: Antrieb
- 8: Leiste
- 9: Prallfläche
- 10: Auslassöffnung

- 11: Umfangsfläche
- 12: Sammelkanal
- 13: Doppelpfeil
- 14: Rückseite
- 15: Strukturierung

- R: Pfeilrichtung
- S: Walzenspalt

## Patentansprüche

1. Eine insbesondere mobile, mit mehreren Radiallüftern (2) ausgestattete Absaugeinrichtung (1) für Partikel oder sonstige Fremdstoffe, wobei der jeweilige Radiallüfter (2) mit einer Ansaugöffnung (6) zum Ansaugen der bei einer Bearbeitung abgetragenen Partikel und einer Auslassöffnung (10) zur Abgabe der Partikel in eine Sammeleinrichtung ausgestattet ist, und wobei der Radiallüfter (2) ein um eine Rotationsachse (3) drehbeweglich angetriebenes Lüfterrad (4) mit einer Umfangsfläche (11) und mit einer der Ansaugöffnung (6) zugewandten Prallfläche (9) zur radialen Ablenkung der auf die Prallfläche (9) auftreffenden Partikel oder Fremdstoffe hat, **dadurch gekennzeichnet, dass** die Absaugeinrichtung (1) zumindest zwei Radiallüfter (2) hat, die zumindest einen das jeweilige Lüfterrad (4) umfangsabschnittsweise einschließenden Sammelkanal (12) aufweisen, wobei die Lüfterräder (4) benachbarter Radiallüfter (2) der Absaugeinrichtung (1) mit ihrer jeweiligen Umfangsfläche (11) einen Walzenspalt (S) begrenzen und dass der jeweilige Sammelkanal (12) der verschiedenen benachbarten Lüfterräder (4) in diesen Walzenspalt (S) mündet.

2. Absaugeinrichtung (1) nach Anspruch 1, **dadurch gekennzeichnet, dass** die Querschnittsfläche des Sammelkanals (12) in Strömungsrichtung insbesondere stetig abnimmt.

3. Absaugeinrichtung (1) nach Anspruch 1 oder 2, **dadurch gekennzeichnet, dass** die Umfangsfläche (11) des jeweiligen Lüfterrads (4) durch die Mantelfläche eines rotationssymmetrischen, insbesondere zylindrischen Lüfterrads (4) gebildet ist.

4. Absaugeinrichtung (1) nach zumindest einem der vorhergehenden Ansprüche, **dadurch gekennzeichnet, dass** der Sammelkanal (12) zumindest in einem dem Walzenspalt (S) benachbarten Bereich die Umfangsfläche (11) sowie die Prallfläche (9) und/oder eine Rückseite (14) mit einem geringen Spalt begrenzend einschließt.

5. Absaugeinrichtung (1) nach zumindest einem der vorhergehenden Ansprüche, **dadurch gekennzeichnet, dass** der Sammelkanal (12) tangential in den Walzenspalt (S) zwischen den Lüfterrädern (4) mündet.

6. Absaugeinrichtung (1) nach zumindest einem der vorhergehenden Ansprüche, **dadurch gekennzeichnet, dass** die Größe des Walzenspalts (S) einstellbar ist.

7. Absaugeinrichtung (1) nach zumindest einem der vorhergehenden Ansprüche, **dadurch gekennzeichnet, dass** die Umfangsflächen (11) eine Strukturierung und/oder Konturierung, mit insbesondere nuten- oder rillenförmigen parallelen Vertiefungen aufweisen.

8. Absaugeinrichtung (1) nach zumindest einem der vorhergehenden Ansprüche, **dadurch gekennzeichnet, dass** die Umfangsfläche (11) in Umfangsrichtung eine zyklisch zunehmende und abnehmende Kontur aufweist, die in eine entsprechende Kontur der benachbarten Umfangsfläche (11) eingreift.

9. Mobile Bearbeitungseinheit zur spanabhebenden Bearbeitung, insbesondere einer Gleisschiene für Schienenfahrzeuge mit einer Absaugeinrichtung (1) nach zumindest einem der vorhergehenden Ansprüche.

10. Schienenfahrzeug mit einer eine Absaugeinrichtung (1) nach zumindest einem der Ansprüche 1 bis 8 aufweisenden Bearbeitungseinheit zur spanabhebenden Bearbeitung.

## Claims

1. In particular mobile suction-extraction device (1), provided with multiple radial fans (2), for particles or other foreign bodies, wherein the respective radial fan (2) is provided with an intake opening (6) for sucking-in of the particles removed during a machining operation and with an outlet opening (10) for discharge of the particles into a collecting device, and wherein the radial fan (2) has a fan wheel (4) which is driven so as to be rotatable about an axis of rotation (3) and which has a circumferential surface (11) and which has an impact surface (9), facing the intake opening (6), for radially deflecting the particles or foreign bodies that strike the impact surface (9), **characterized in that** that the suction-extraction device (1) has at least two radial fans (2) having at least one collecting channel (12) which sectionally surrounds the respective fan wheel (4) over the circumference, wherein the fan wheels (4) of adjacent radial fans (2) of the suction-extraction device (1) delimit a roller gap (S) by way of their respective circumferential surfaces (11), and **in that** the respective collecting channel (12) of the different adjacent fan wheels (4) opens out into said roller gap (S).

2. Suction-extraction device (1) according to Claim 1, **characterized in that** the cross-sectional area of the collecting channel (12) decreases in particular continuously in the flow direction.

3. Suction-extraction device (1) according to Claim 1 or 2, **characterized in that** the circumferential surface (11) of the respective fan wheel (4) is formed by the lateral surface of a rotationally symmetrical, in particular cylindrical fan wheel (4).

4. Suction-extraction device (1) according to at least one of the preceding claims, **characterized in that**, at least in a region adjacent to the roller gap (S), the collecting channel (12) surrounds the circumferential surface (11) and also the impact surface (9) and/or a rear side (14) in a delimiting manner with a small gap.

5. Suction-extraction device (1) according to at least one of the preceding claims, **characterized in that** the collecting channel (12) opens out into the roller gap (S) between the fan wheels (4) tangentially.

6. Suction-extraction device (1) according to at least one of the preceding claims, **characterized in that** the size of the roller gap (S) is adjustable.

7. Suction-extraction device (1) according to at least one of the preceding claims, **characterized in that** the circumferential surfaces (11) have a structuring and/or contouring with in particular groove-shaped or channel-shaped parallel recesses.

8. Suction-extraction device (1) according to at least one of the preceding claims, **characterized in that** the circumferential surface (11) has in the circumferential direction a cyclically increasing and decreasing contour which engages into a corresponding contour of the adjacent circumferential surface (11).

9. Mobile machining unit for cutting machining, in particular of a track rail for rail vehicles, having a suction-extraction device (1) according to at least one of the preceding claims.

10. Rail vehicle having a machining unit for cutting machining that has a suction-extraction device (1) according to at least one of Claims 1 to 8.

## Revendications

1. Dispositif d'aspiration (1), en particulier mobile, équipé de plusieurs ventilateurs radiaux (2) pour des particules ou d'autres substances étrangères, le ventilateur radial (2) respectif étant équipé d'une ouverture d'aspiration (6) pour l'aspiration des particules enlevées lors d'un usinage, et d'une ouverture de sortie (10) pour l'évacuation des particules dans un dispositif de collecte, et le ventilateur radial (2) ayant une roue de ventilateur (4) entraînée en rotation autour d'un axe de rotation (3), avec une surface périphérique (11) et avec une surface d'impact (9) tournée vers l'ouverture d'aspiration (6) de façon à dévier radialement les particules ou les substances étrangères arrivant sur la surface d'impact (9), **caractérisé en ce que** le dispositif d'aspiration (1) a au moins deux ventilateurs radiaux (2) qui présentent au moins un canal collecteur (12) entourant la roue de ventilateur (4) respective sur une partie de la périphérie, les roues de ventilateur (4) de ventilateurs radiaux (2) voisins du dispositif d'aspiration (1) délimitant, par leur surface périphérique (11) respective, un interstice (S) et **en ce que** le canal collecteur (12) respectif des différentes roues de ventilateur (4) voisines débouche dans cet interstice (S).

2. Dispositif d'aspiration (1) selon la revendication 1, **caractérisé en ce que** la surface de la section transversale du canal collecteur (12) diminue notamment de manière continue dans le sens de l'écoulement.

3. Dispositif d'aspiration (1) selon la revendication 1 ou la revendication 2, **caractérisé en ce que** la surface périphérique (11) de chaque roue de ventilateur (4) est formée par la surface d'enveloppe d'une roue de ventilateur (4) à symétrie de révolution, en particulier cylindrique.

4. Dispositif d'aspiration (1) selon au moins l'une des revendications précédentes, **caractérisé en ce que** le canal collecteur (12) entoure, au moins dans une zone voisine de l'interstice (S), la surface périphérique (11) ainsi que la surface d'impact (9) et/ou une face arrière (14), en les délimitant par un petit espace.

5. Dispositif d'aspiration (1) selon au moins l'une des revendications précédentes, **caractérisé en ce que** le canal collecteur (12) débouche tangentiellement dans l'interstice (S) entre les roues de ventilateur (4).

6. Dispositif d'aspiration (1) selon au moins l'une des revendications précédentes, **caractérisé en ce que** la taille de l'interstice (S) est réglable.

7. Dispositif d'aspiration (1) selon au moins l'une des revendications précédentes, **caractérisé en ce que** les surfaces périphériques (11) présentent une structuration et/ou un contour, avec notamment des creux parallèles en forme de rainures ou de gorges.

8. Dispositif d'aspiration (1) selon au moins l'une des revendications précédentes, **caractérisé en ce que** la surface périphérique (11) présente, dans la direction périphérique, un contour qui augmente et diminue de manière cyclique et qui s'engage dans un contour correspondant de la surface périphérique (11) voisine.

9. Unité d'usinage mobile pour l'usinage par enlèvement de copeaux, en particulier d'un rail de voie ferrée pour véhicules ferroviaires, comprenant un dispositif d'aspiration (1) selon au moins l'une des revendications précédentes.

10. Véhicule ferroviaire comprenant une unité d'usinage par enlèvement de copeaux qui présente un dispositif d'aspiration (1) selon au moins l'une des revendications 1 à 8.
